# EUROPÄISCHE PATENTSCHRIFT

(11) **EP 3 632 138 B1**
(45) Veröffentlichungstag und Bekanntmachung des Hinweises auf die Patenterteilung: **25.06.2025**
(21) Anmeldenummer: 18711560.5
(22) Anmeldetag: 16.03.2018
(51) Int. Cl.: H04S 7/00, A42B 3/04

(54) **VERFAHREN ZUR BEREITSTELLUNG EINES RÄUMLICH WAHRNEHMBAREN AKUSTIKSIGNALS FÜR EINEN ZWEIRADFAHRER**
METHOD FOR PRODUCING A SPATIALLY PERCEPTIBLE ACOUSTIC SIGNAL FOR A MOTORBIKER
PROCÉDÉ DE LA PRODUCTION D'UN SIGNAL ACOUSTIQUE SPATIALEMENT PERCEPTIBLE POUR UN MOTARD

(30) Priorität: 22.05.2017 DE 102017208600
(43) Veröffentlichungstag der Anmeldung: 08.04.2020
(73) Patentinhaber: Bayerische Motoren Werke Aktiengesellschaft, 80809 München (DE)
(72) Erfinder: EHRMANN, Michael, 85757 Karlsfeld (DE); RICHTER, Robert, Santa Clara, California 95054 (US); SCHENK, Kerstin, Redwood City, California 94062 (US)
(86) Internationale Anmeldenummer: PCT/EP2018/056693
(87) Internationale Veröffentlichungsnummer: WO 2018/215111

(56) Entgegenhaltungen:
- US-A1- 2003 059 070
- US-B1- 9 578 419

## Beschreibung

Die Erfindung betrifft ein Verfahren und ein System zur Bereitstellung eines räumlich wahrnehmbaren Akustiksignals für einen Zweiradfahrer. Die Erfindung betrifft ferner einen Helm, welcher bei der Nutzung des Zweirads durch einen Zweiradfahrer von diesem getragen wird.

Durch die Verwendung eines Helms bei der Nutzung eines Zweirads, wie z.B. eines Motorrads oder eines Motorrollers, ist der Zweiradfahrer akustisch von seiner Umgebung entkoppelt. Da durch die Verwendung eines Helms ferner die räumliche Wahrnehmung von Geräuschen verschlechtert ist, ist es dem Zweiradfahrer nicht möglich, darin Signale oder Geräusche räumlich zuzuordnen. Darüber hinaus ist das Blickfeld bei der Nutzung eines Helms eingeschränkt, so dass Bedien- und Anzeigeelemente des Zweirads leicht übersehen werden können.

Um mit einem Sozius auf dem Zweirad kommunizieren zu können, sind Motorradhelme bekannt, welche über ein Lautsprechersystem und ein Mikrofon verfügen, so dass eine Wechselsprechmöglichkeit zwischen den beiden Zweiradfahrern des Zweirads besteht. Um es einem Zweiradfahrer zu ermöglichen, über sein Mobilfunktelefon mit einem anderen Teilnehmer sprechen zu können, sind Helme auch teilweise mit einer Bluetooth-Kommunikationseinheit ausgestattet, über welche ein Nachrichtenaustausch zwischen der Bluetooth-Kommunikationseinheit des Helms und einem Mobilfunkendgerät ermöglicht wird.

Die US 9 578 419 B1 offenbart ein Verfahren und eine Vorrichtung zur Schätzung des räumlichen Inhalts eines Schallfeldes für einen Benutzer, der einen Helm trägt, das den Klang nachahmt, den ein Benutzer ohne Helm erleben würde. Hierzu ist der Helm mit zwei oder mehr Mikrophonen versehen, um Geräusche aufzunehmen. Nach einem Filtern der Geräusche und einem Platzieren von virtuellen Lautsprechern an den Positionen von ermittelten Schallquellen erfolgt eine Ausgabe der Geräusche mittels der virtuellen Lautsprecher über Stereolautsprecher des Helms.

In der US 2003/0059070 A1 wird ein Lautsprecherpaar nicht in Kopfhörern, sondern an einer Stelle in der Nähe der Schläfe des Kopfes eines Zuhörers angebracht, wie z.B. an einem Brillengestell oder im Inneren eines Helms. Ein ebenfalls am Rahmen, an dem die Lautsprecher montiert sind, angebrachtes Kopfverfolgungssystem bestimmt die Position und Ausrichtung des Kopfes des Zuhörers und liefert die Messungen an ein Computersystem zur Audiosignalverarbeitung in Verbindung mit einem Filter, um räumlich verteilte Audiosignale zu erzeugen. Das Filter behält die virtuelle Position der Audiosignale bei und ermöglicht so dem Zuhörer, die Position und die Orientierung des Kopfes zu ändern, ohne das Audiosignal zu verschlechtern. Das System erzeugt virtuelle Schallquellen, die von außen wahrgenommen und in jeder gewünschten Orientierung in Azimut und Elevation vom Zuhörer aus positioniert werden.

Die US 2015 / 0336 578 A1 offenbart ein System im Kontext von Verkehrsmitteln, das mit einem tragbaren Gerät, wie z.B. einem Helm, einer Schutzbrille oder ähnlichem interagiert. Das tragbare Gerät kann Audiodaten empfangen und verarbeiten, die von an einem Fahrzeug angebrachten Mikrophonen empfangen werden.

Es ist Aufgabe der Erfindung, ein Verfahren und ein System anzugeben, welche die Bereitstellung eines räumlich wahrnehmbaren Akustiksignals für einen Zweiradfahrer ermöglichen. Eine weitere Aufgabe ist es, einen Helm für einen Zweiradfahrer anzugeben, der die Wahrnehmung räumlicher Signale ermöglicht.

Diese Aufgaben werden gelöst durch ein Verfahren gemäß den Merkmalen des Anspruchs 1, ein System gemäß den Merkmalen des Anspruchs 13 und einen Helm gemäß den Merkmalen des Anspruchs 18. Vorteilhafte Ausgestaltungen ergeben sich aus den abhängigen Ansprüchen.

Es wird ein Verfahren zur Bereitstellung eines räumlich wahrnehmbaren Akustiksignals für einen Zweiradfahrer vorgeschlagen. Das Verfahren umfasst die Schritte: Bereitstellen eines Akustiksignals durch ein Zweirad, wobei das Akustiksignal ein von dem Zweirad erzeugtes Betätigungssignal eines Bedienelements des Zweirads ist, das abhängig von der Stellung eines Schalters des Bedienelements erzeugt wird, Bestimmen einer Pose eines von dem Zweiradfahrer getragenen Helms relativ zu dem Zweirad, Verarbeiten des Akustiksignals in Abhängigkeit der ermittelten Pose zu einem dreidimensionalen Ausgabesignal, das eine binaurale Abbildung des Akustiksignals darstellt, Ausgabe des Ausgabesignals über einen Stereokopfhörer des Helms, wobei das Ausgabesignal in Abhängigkeit der ermittelten Pose eine in dem Akustiksignal enthaltene Schallquelle im Raum platziert, wodurch die Schallquelle für den Zweiradfahrer räumlich verortbar ist, wobei das Ausgabesignal über die Lautstärke einen Eindruck vermittelt, wie nah sich der Ort der Schallquelle relativ zu dem Zweiradfahrer befindet.

Dem Verfahren liegt die Überlegung zugrunde, dass mit Hilfe eines in einem Helm vorhandenen Stereokopfhörers eine Geräuschquelle in dreidimensionalem Raum erzeugt werden kann, indem bei der Erzeugung und Ausgabe des Ausgabesignals eine Pose des von dem Zweiradfahrer getragenen Helms relativ zu dem Zweirad berücksichtigt wird. Unter der Pose wird die Kombination von Position und Orientierung des Helms, und damit der Ohren des Kopfes des Zweiradfahrers, relativ zu dem Zweirad verstanden. Es kann somit berücksichtigt werden, ob der Zweiradfahrer in Fahrtrichtung oder quer/seitlich zur Fahrtrichtung blickt. Da der Ort der Schallquelle, unabhängig von der Bewegung des Helms und damit der Pose, konstant bleibt, kann durch entsprechende Veränderung des Ausgabesignals und Ausgabe über die Stereokopfhörer dem Zweiradfahrer der Eindruck vermittelt werden, wo sich der Ort der Schallquelle relativ zu ihm befindet. Hierdurch ist die Lokalisierung des Ortes des Akustiksignals für den Zweiradfahrer erleichtert, was ihm beispielsweise eine schnelle Reaktion erlaubt.

Das Akustiksignal kann ein von dem Zweirad erzeugtes Betätigungssignal eines Bedienelements, insbesondere eines Blinkerhebels oder eines Multifunktionscontrollers, des Zweirads sein. Während der Fahrer eines Kraftfahrzeugs die Betätigung z.B. eines Blinkerhebels durch ein Relais oder die Nachbildung eines solchen Geräusches wahrnehmen kann, ist dies dem Zweiradfahrer aufgrund des von ihm getragenen Helms nicht möglich. In diesem Fall wird das von dem Blinkerhebel erzeugte Betätigungssignal als Akustiksignal zusammen mit der Pose zu dem dreidimensionalen Ausgabesignal verarbeitet und über den Stereokopfhörer des Helms ausgegeben. Abhängig von der Schalterstellung (Blinker ist rechts oder links gesetzt) kann dann der Ort der Schallquelle links oder rechts von dem Zweirad erzeugt werden. Der Zweiradfahrer erhält somit nicht nur eine Rückmeldung, dass der Blinkerhebel betätigt ist, sondern auch in welche Richtung der Blinkerhebel betätigt wurde. Betätigungssignale können grundsätzlich von sämtlichen Bedienelementen des Zweirads erzeugt werden. Die Betätigungssignale können sich in Abhängigkeit des betätigten Bedienelements hinsichtlich ihres Ort und/oder ihrer Tonart und/oder Tonlage unterscheiden. Dabei ist auch die örtliche Wahrnehmung gegeben, unabhängig von der Pose des Helms relativ zu dem Zweirad.

Das Akustiksignal kann ein Sprachsignal sein. Das Sprachsignal kann beispielsweise eine von einem Infotainmentsystem des Zweirads ausgegebene Sprachinformation, wie z.B. eine Navigationsansage, eine Wetteransage, eine Verkehrsmeldung, usw., sein. Ein Sprachsignal kann auch eine Rückmeldung über die Betätigung eines Bedienelements und dergleichen umfassen. Das Sprachsignal kann auch ein von einem anderen Verkehrsteilnehmer, insbesondere Zweiradfahrer, empfangenes Sprachsignal sein. In diesem Fall kann beispielsweise bei einer größeren Gruppe von Zweiradfahrern das Sprachsignal eines ersten Zweiradfahrers vorne links, eines zweiten Zweiradfahrers vorne rechts, eines dritten Zweiradfahrers hinten links und so weiter erzeugt werden. Die örtliche Platzierung der Sprachsignale unterschiedlicher anderer Zweiradfahrer kann auch entsprechend der tatsächlichen relativen Position zu dem Zweiradfahrer des das Verfahren nutzenden Zweirads positioniert werden.

Das Akustiksignal kann ein Warnsignal eines Fahrerassistenzsystems sein. Ein solches Fahrerassistenzsystem kann insbesondere eine Rangier- oder Einparkhilfe, ähnlich einer sog. Park Distance Control von Kraftfahrzeugen, sein. Hierzu kann, wie bei den von Kraftfahrzeugen bekannten Systemen, mittels Ultraschallsensoren oder anderen Sensoren der Abstand zu Hindernissen und anderen Verkehrsteilnehmern (allgemein: Objekten) gemessen werden. In Abhängigkeit einer sich verringernden Distanz kann dann in Abhängigkeit des Ortes, z.B. hinten links oder hinten rechts, das Ausgabesignal über den Stereokopfhörer erzeugt werden, um dem Zweiradfahrer zu signalisieren, dass eine Annäherung des Zweirads von hinten links oder hinten rechts erfolgt. Das Ausgabesignal wird dabei abhängig von der Pose des Helms zu dem Zweirad erzeugt, z.B. einem sich links oder rechts drehenden Kopf um die Rumpfachse des Körpers, so dass der Ort der Annäherung aufgrund des über die Stereokopfhörer ausgegebenen Ausgabesignals ortsfest erscheint. Hierdurch wird dem Zweiradfahrer die Orientierung wesentlich erleichtert.

Ein Fahrerassistenzsystem kann darüber hinaus ein Totwinkelsystem oder ein Querverkehrwarensystem sein, wie diese ebenfalls von Kraftfahrzeugen gut bekannt sind. Unter der Voraussetzung, dass das Zweirad über entsprechende Sensoren verfügt, kann unabhängig davon, ob der Zweiradfahrer ein sich von seitlich hinten näherndes Fahrzeug selbst oder über den Spiegel wahrnimmt, durch ein akustisches Signal über den Stereokopfhörer angezeigt werden. Abhängig davon, ob sich der andere Verkehrsteilnehmer von hinten links oder hinten rechts nähert, wird das Ausgabesignal derart erzeugt, dass beim Fahrer des Zweirads der Eindruck entsteht, dass sich der Verkehrsteilnehmer von der entsprechenden Seite hinten annähert. Eine entsprechende akustische Wahrnehmbarkeit kann bei einem Querverkehrwarnsystem realisiert werden, welche das Einfahren in eine Straße erleichtern soll.

Bei dem Akustiksignal kann es sich um ein Warnsignal handeln, welches von dem Zweirad aus einer von dem Zweirad empfangenen Information erzeugt ist, wobei die Information ein Warnton eines anderen Verkehrsteilnehmers ist, der von einem Mikrofon des Zweirads erfasst wird, oder wobei die Information eine von einem Sender ausgesendete und empfangene Nachricht ist, die eine Warnung repräsentiert. Das Akustiksignal kann beispielsweise ein Martinshorn eines Krankenwagens oder eines Polizei-Fahrzeugs repräsentieren. Abhängig von der Richtung, von der sich der das Martinshorn eingeschaltete Verkehrsteilnehmer dem Fahrer des Zweirads nähert, wird dieses als Ausgabesignal über den Stereokopfhörer synthetisiert. Da die Erzeugung des Ausgabesignals aus dem Akustiksignal und die Bestimmung der Pose des Helms kontinuierlich erfolgen, kann die Bewegung des Akustiksignals auf einfache Weise nachgebildet und über den Stereokopfhörer ausgegeben werden. Das Akustiksignal kann in einer anderen Ausgestaltung eine beispielsweise von einem anderen Fahrzeug über eine Fahrzeug-zu-Fahrzeug-Kommunikation ausgesendete Information sein. Hierdurch kann beispielsweise ein liegengebliebener Verkehrsteilnehmer signalisiert werden. Da mit Hilfe des Ausgabesignals immer ein räumlicher Bezug des Orts der Schallquelle oder des Senders relativ zu dem Zweirad erzeugt wird, wird für den Zweiradfahrer ohne weiteres klar, an welchem Ort sich beispielsweise eine Gefahrenquelle befindet.

Die Ausgabe des Ausgabesignals kann dabei nicht nur eine Information über den Ort der Schallquelle bereitstellen. Vielmehr kann auch über die Lautstärke des Ausgabesignals ein Eindruck vermittelt werden, wie nah sich der Ort der Schallquelle relativ zu dem Zweirad bzw. dem Zweiradfahrer befindet. Zum Beispiel kann das Ausgabesignal umso lauter werden, je näher der Helm dem Ort der Erzeugung des Akustiksignals (d.h. dem Ort der Schallquelle) kommt.

Die Bestimmung der Pose des von dem Zweiradfahrer getragenen Helms relativ zu dem Zweirad erfolgt gemäß einer zweckmäßigen Ausgestaltung durch eine inertiale Messeinheit in dem Helm und/oder in dem Zweirad. Alternativ oder zusätzlich erfolgt die Bestimmung der Pose des von dem Zweiradfahrer getragenen Helms relativ zu dem Zweirad durch eine oder mehrere Kameras in dem Helm und/oder dem Zweirad erfolgen.

Verfahren zur Bestimmung der Rotation und/oder Position des Helms relativ zu dem Zweirad sind aus dem Stand der Technik gut bekannt. Hierzu kann beispielsweise eine einzige intertiale Messeinheit (englisch: Inertial Measurement Unit, IMU) verwendet werden, wie diese beispielsweise in [1] beschrieben ist. Ein alternatives Verfahren zur Bestimmung der Pose mittels einer einzigen inertialen Messeinheit ist in [2] beschrieben. Alternativ können sog. Differentialverfahren von inertialen Messeinheiten zum Einsatz kommen, wie diese beispielsweise in [3] beschrieben sind. Eine Anordnung zur Bestimmung der Pose aus einer inertialen Messeinheit und einem magnetischen Tracking ist in [4] beschrieben. Kamerabasierte Ansätze zur Positionsbestimmung sind beispielsweise aus [5] bekannt. Technologisch liefern alle genannten Verfahren das gleiche Ergebnis, das sich lediglich in der Qualität der bestimmten Pose unterscheidet.

Die Bestimmung der Pose des von dem Zweiradfahrer getragenen Helms relativ zu dem Zweirad umfasst gemäß einer weiteren zweckmäßigen Ausgestaltung zumindest eine Rotationsbewegung des Helms relativ zu der Fahrtrichtung des Zweirads. Hierdurch wird dem Umstand Rechnung getragen, dass der Zweiradfahrer aufgrund des eingeschränkten Sichtfelds aufgrund des Tragens des Helms verhältnismäßig häufig eine Drehung des Kopfs vornimmt, während er das Zweirad nutzt. Hierdurch kann dem Zweiradfahrer mit einer verhältnismäßig guten Genauigkeit der Ort der Schallquelle durch die geeignete Erzeugung des Ausgabesignals in dem Helm bereitgestellt werden.

Eine weiter verbesserte Ortung des Orts einer Schallquelle wird dadurch möglich, dass gemäß einer weiteren zweckmäßigen Ausgestaltung die Bestimmung der Pose des von dem Zweiradfahrer getragenen Helms relativ zu dem Zweirad eine Entfernung des Helms zu einem Lenker des Zweirads und/oder zu einer anderen Komponente des Zweirads umfasst. Hierdurch kann beispielsweise durch Variation der Lautstärke des Ausgabesignals der Ort der Schallquelle bei einer Annäherung des Helms relativ zu dem Lenker oder der anderen Komponente des Zweirads kenntlich gemacht werden.

Gemäß einer zweckmäßigen Ausgestaltung kann die Bestimmung der Pose durch eine Recheneinheit in dem Helm erfolgen. Die Bestimmung der Pose kann alternativ durch eine Recheneinheit in dem Zweirad durchgeführt werden. Ebenso ist eine Variante denkbar, bei der die Bestimmung der Pose sowohl durch eine Recheneinheit in dem Helm als auch durch eine Recheneinheit in dem Zweirad durchgeführt wird. Gegebenenfalls erforderliche Sensordaten werden dann von dem Helm an das Zweirad, oder umgekehrt, übertragen, um sämtliche für die Berechnung der Pose erforderlichen Daten in der betreffenden Recheneinheit verarbeiten zu können.

Gemäß einer weiteren zweckmäßigen Ausgestaltung wird das Akustiksignal von dem Zweirad an den Helm des Zweiradfahrers übertragen und es wird eine Bestimmung des Ausgabesignals durch eine Recheneinheit in dem Helm durchgeführt. Alternativ wird eine Bestimmung des Ausgabesignals durch eine Recheneinheit in dem Zweirad durchgeführt und das Ausgabesignal wird von dem Zweirad an den Helm des Zweiradfahrers übertragen.

Gemäß einer weiteren zweckmäßigen Ausgestaltung erfolgt die Ermittlung des Ausgabesignals durch einen 3D-Soundprozessor, in dem das Akustiksignal und die Pose repräsentierende Informationen miteinander zu dem Ausgabesignal verknüpft werden. Derartige 3D-Soundprozessoren sind aus dem Stand der Technik hinlänglich bekannt. Diesbezügliche Grundlagen können beispielsweise den Veröffentlichungen [6] und [7] entnommen werden. Allgemein basieren derartige Algorithmen auf Zeitdifferenzen von Signalen bis zum Erreichen der linken und rechten Ohrmuschel sowie unterschiedlicher Phasen und Amplituden.

Die Erfindung schlägt ferner ein System zur Bereitstellung eines räumlich wahrnehmbaren Akustiksignals für einen Zweiradfahrer gemäß dem oben beschriebenen Verfahren vor. Das System umfasst ein Zweirad, einen von einem Zweiradfahrer zu tragenden Helm, eine Einheit zur Bestimmung einer Pose des Helms sowie eine Einheit zur Bestimmung des Ausgabesignals. Das Zweirad umfasst eine erste Kommunikationseinheit, wobei durch das Zweirad ein Akustiksignal, das ein von dem Zweirad erzeugtes Betätigungssignal eines Bedienelements des Zweirads ist, das abhängig von der Stellung eines Schalters des Bedienelements erzeugt ist, bereitstellbar ist, in dem zumindest eine Schallquelle enthalten ist. Der von dem Zweiradfahrer zu tragende Helm umfasst eine zweite Kommunikationseinheit und einen Stereokopfhörer zur Wiedergabe des Audiosignals. Die Einheit zur Bestimmung der Pose dient der Bestimmung der Pose des Helms relativ zu dem Zweirad. Die Einheit zur Bestimmung des Ausgabesignals ist dazu ausgebildet, das Akustiksignal in Abhängigkeit der ermittelten Pose und der Nähe des Orts der Schallquelle relativ zu dem Zweiradfahrer zu dem dreidimensionalen Ausgabesignal, das eine binaurale Abbildung des Akustiksignals darstellt, zu verarbeiten.

Das vorgeschlagene System weist die gleichen Vorteile auf, wie diese vorstehend in Verbindung mit dem erfindungsgemäßen Verfahren beschrieben wurden.

Gemäß einer zweckmäßigen Ausgestaltung umfassen der Helm und/oder das Zweirad eine inertiale Messeinheit und/oder eine oder mehrere Kameras.

Gemäß einer weiteren zweckmäßigen Ausgestaltung umfassen der Helm oder das Zweirad die Einheit zur Bestimmung der Pose des Helms.

Gemäß einer weiteren zweckmäßigen Ausgestaltung umfassen der Helm oder das Zweirad die Einheit zur Bestimmung des Ausgabesignals.

Darüber hinaus kann das System weitere Mittel zur Durchführung des hier beschriebenen Verfahrens umfassen.

Von der Erfindung ist ferner ein Helm zur Bereitstellung eines räumlich wahrnehmbaren Akustiksignals für einen Zweiradfahrer bereitgestellt, der zur Verwendung in dem hier beschriebenen Verfahren dient. Der Helm umfasst eine Kommunikationseinheit, einen Stereokopfhörer zur Wiedergabe eines Audiosignals, wobei das Akustiksignal ein von dem Zweirad erzeugtes Betätigungssignal eines Bedienelements des Zweirads ist, das abhängig von der Stellung eines Schalters des Bedienelements erzeugt ist, und eine Einheit zur Bestimmung des Ausgabesignals, indem das Akustiksignal in Abhängigkeit einer ermittelten Pose und der Nähe des Orts der Schallquelle relativ zu dem Zweiradfahrer zu dem dreidimensionalen Ausgabesignal, das eine binaurale Abbildung des Akustiksignals darstellt, verarbeitet wird.

Gemäß einer zweckmäßigen Ausgestaltung kann der Helm eine inertiale Messeinheit umfassen. Gemäß einer weiteren zweckmäßigen Ausgestaltung kann der Helm eine Einheit zur Bestimmung der Pose des Helms umfassen.

Die Erfindung wird nachfolgend näher anhand eines Ausführungsbeispiels in der Zeichnung erläutert. In den Zeichnungen sind gleiche Merkmale mit gleichen Bezugszeichen versehen. Es zeigen:
- Fig. 1: eine schematische Darstellung eines Zweirads und eines Helms, wobei sich der Helm in einer ersten Pose relativ zu dem Zweirad befindet;
- Fig. 2: eine schematische Darstellung eines Zweirads und eines Helms, wobei sich der Helm in einer zweiten Pose relativ zu dem Zweirad befindet; und
- Fig. 3: eine schematische Darstellung des Ablaufs des erfindungsgemäßen Verfahrens.

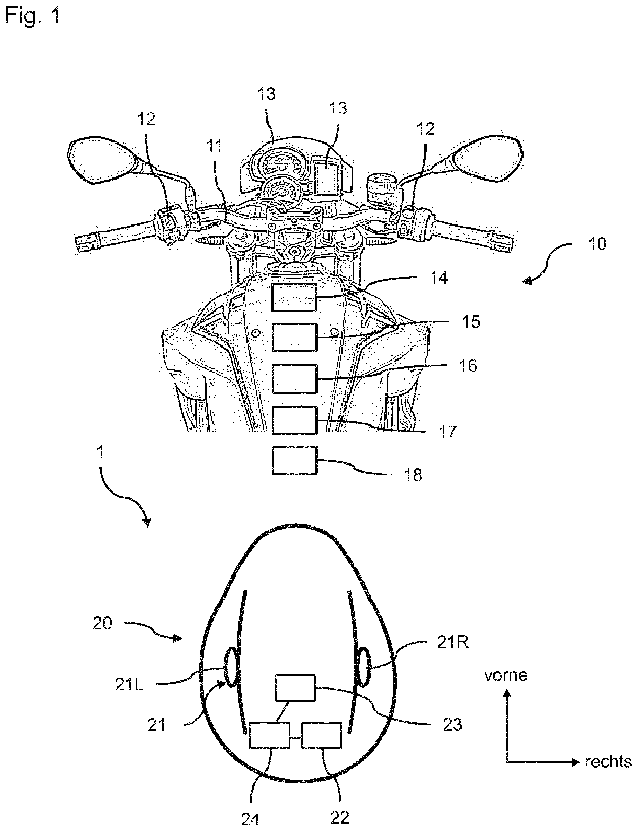

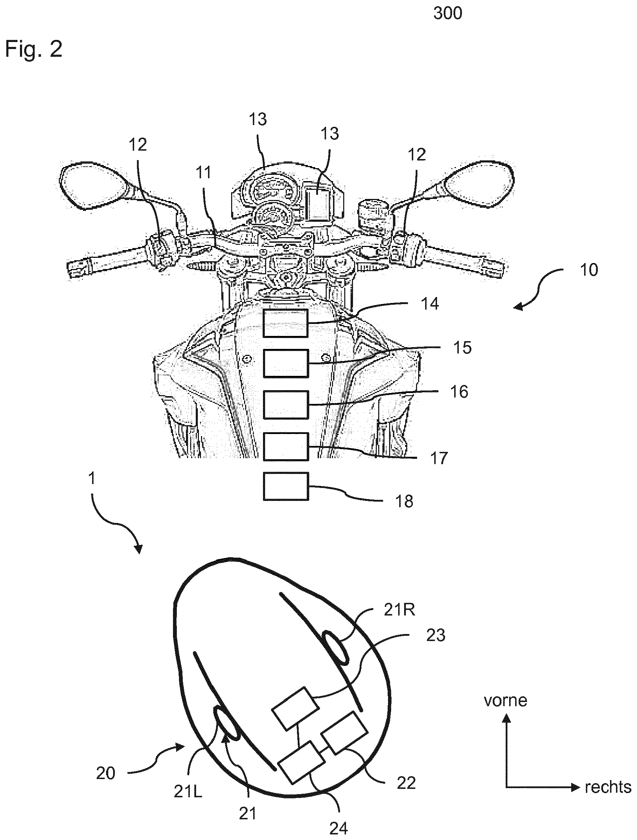

Die Fig. 1 und 2 zeigen jeweils in einer schematischen Ansicht die wesentlichen Komponenten eines erfindungsgemäßen Systems 1 zur Bereitstellung eines räumlich wahrnehmbaren Akustiksignals für einen Zweiradfahrer.

Das System umfasst ein Zweirad 10, das lediglich Ausschnittsweise dargestellt ist, sowie einen Helm 20, der von einem ebenfalls nicht dargestellten Zweiradfahrer während der Nutzung des Zweirads 10 zu tragen ist.

Das Zweirad 10 umfasst in üblicher Weise einen Lenker 11, Bedienelemente 12, Anzeigeelemente 13 und dergleichen mehr. Die Bedienelemente 12 sind in üblicher Weise an dem Lenker 11 angebracht. Die Bedienelemente 12 umfassen Schalter, wie z.B. einen Lichtschalter, eine Hupe, einen Blinker und dergleichen. Die Anzeigeelemente 13 sind ebenfalls am oder im Bereich des Lenkers 11 angeordnet und umfassen einen Geschwindigkeitsanzeiger, einen Drehzahlmesser (digital und/oder analog) sowie ein Display zur Visualisierung von Statusinformationen des Zweirads 10, Karten, Navigationsanzeigen und dergleichen. Das Anzeigeelement 13 kann als Infotainmentsystem ausgebildet sein. Die Betätigung eines jeweiligen Bedienelements 12 geht in der Regel mit einer Visualisierung der Betätigung, z.B. einer (blinkenden) Leuchte, einher.

Das Zweirad 10 kann darüber hinaus über ein oder mehrere Fahrerassistenzsysteme 18 verfügen. Als Fahrerassistenzsysteme 18 werden in jüngster Zeit von Kraftfahrzeugen bekannte Fahrerassistenzsysteme übernommen und an das Zweirad 10 angepasst. Hierzu zählen beispielsweise eine Rangier- oder Einparkhilfe, welche mit Hilfe von einem oder mehreren Ultraschallsensoren, insbesondere im rückwärtigen Bereich des Zweirads, den für den Zweiradfahrer nicht oder schlecht einsehbaren Bereich erfasst, um beim Rangieren oder Rückwärtsrollen eine Information über, z.B. Abstände, zu einem Objekt in der Nähe zu liefern. Aufgrund des von dem Zweiradfahrer getragenen Helms 20 ist dieser von der Umwelt akustisch entkoppelt, weswegen von dem Fahrerassistenzsystem 18 aufbereitete Daten, z.B. auf dem Anzeigeelement 13, visualisiert werden. Das Fahrerassistenzsystem 18 kann darüber hinaus, z.B. unter Nutzung der bereits erwähnten Ultraschallsensoren, ein Totwinkelsystem bereitstellen, welches die Annäherung eines fahrenden Objekts von seitlich hinten ermöglicht. Eine solche Signalisierung kann, ähnlich wie bei Kraftfahrzeugen, z.B. mit Hilfe einer im linken oder rechten Außenspiegel integrierten Warnleuchte erfolgen. Als weitere Fahrerassistenzsysteme sind Querverkehrwarnsysteme denkbar, welche den Zweiradfahrer beim Einfahren in eine schlecht einsehbare Kreuzung vor querenden Objekten warnt. Die Erfassung des Querverkehrs kann mit Hilfe von Ultraschallsensoren und/oder Kameras realisiert werden. Informationen über einen Querverkehr können dann über das Anzeigeelement 13 visualisiert werden.

Das Zweirad 10 umfasst darüber hinaus eine Kommunikationseinheit 14, eine optionale Einheit 15 zur Bestimmung eines Ausgabesignals, eine optionale Kamera 16 sowie eine zentrale Steuereinheit 17.

Die Kommunikationseinheit 14 ist dazu ausgebildet, Daten mit einer korrespondierenden Kommunikationseinheit 22 des Helms 20 auszutauschen. Darüber hinaus kann die Kommunikationseinheit 14 dazu eingerichtet sein, Daten, z.B. mit dem Anzeigeelement 13 (in Gestalt eines Infotainmentsystems) oder mit einem nicht gezeigten Mobilfunkendgerät des Zweiradfahrers oder mit anderen Mobilfunkendgeräten und/oder Kommunikationsknoten auszutauschen. Mit anderen Worten stellt die Kommunikationseinheit 14, die eine Vielzahl von unterschiedlichen Kommunikationskomponenten, die auf unterschiedlichen Kommunikationsstandards basieren, umfassen kann, generelle Kommunikationsfunktionen bereit.

Die optionale Einheit 15 zur Bestimmung des Ausgabesignals und die optionale Kamera 16 werden durch die zentrale Steuereinheit 17 gesteuert. Deren Funktion wird nachfolgend später in Detail beschrieben.

Der von dem Zweiradfahrer während der Nutzung des Zweirads 10 zu tragende Helm 20 umfasst in bekannter Weise einen Stereokopfhörer 21 mit einem linken Lautsprecher 21L und einem rechten Lautsprecher 21R, eine Kommunikationseinheit 22 zur Kommunikation mit der bereits beschriebenen Kommunikationseinheit 14 des Zweirads 10, eine optionale inertiale Messeinheit (englisch: Interial Measurement Unit, IMU) 23 sowie eine optionale Einheit 24 zur Bestimmung des Ausgabesignals.

Über den linken und rechten Lautsprecher 21L, 21R des Stereokopfhörers 21 können von der Kommunikationseinheit 22 empfangene Ausgabesignale ausgegeben werden. Das Ausgabesignal kann beispielsweise ein Sprachsignal, aber auch andere Geräuschquellen umfassen, wie nachfolgend genauer erläutert werden wird.

Die Kommunikationseinheit 22 kann mit der Kommunikationseinheit 14 des Zweirads 10 über einen beliebigen Kommunikationsstandard kommunizieren. Zweckmäßig sind kurzreichweitige Kommunikationsstandards, wie z.B. Bluetooth, Zigbee oder WLAN.

In der vorangegangenen Beschreibung wurden die Einheit 15 zur Bestimmung des Ausgabesignals und die Kamera 16 des Zweirads 10 sowie die inertiale Messeinheit 23 und die Einheit 24 zur Bestimmung des Ausgabesignals des Helms 20 jeweils als optional bezeichnet. Dies ist derart zu verstehen, dass in einer Mindestkonfiguration des Systems entweder die Kamera 16 des Zweirads 10 oder die inertiale Messeinheit 23 des Helms 20 vorgesehen ist. Dies bedeutet, jeweils eine der Komponenten ist zwingend, die andere optional. In einer anderen Ausgestaltung können sowohl die Kamera 16 als auch die inertiale Messeinheit 23 vorgesehen sein.

In entsprechender Weise ist in einer Mindestkonfiguration des Systems wahlweise entweder die Einheit 15 oder die Einheit 24 zur Bestimmung des Ausgabesignals in dem Zweirad 10 oder dem Helm 20 vorgesehen. In einer anderen Ausgestaltungsvariante können sowohl die Einheit 15 als auch die Einheit 24 zur Bestimmung des Ausgabesignals in dem Zweirad 10 und dem Helm 20 vorgesehen sein.

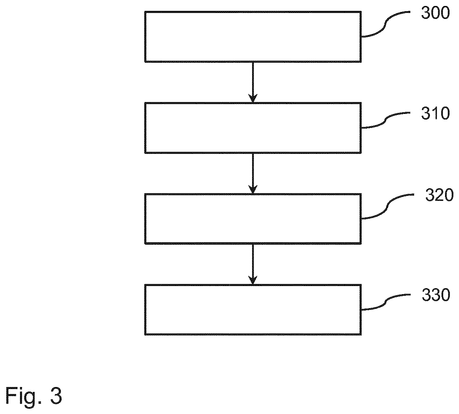

Da der Zweiradfahrer aufgrund des Tragens seines Helms 20 während der Nutzung des Zweirads 10 akustisch von seiner Umwelt entkoppelt ist, ist die Wahrnehmung und insbesondere Ortung von Schallquellen bislang nur schwer bis nicht möglich. Das vorgeschlagene System ermöglicht die Bereitstellung eines räumlich wahrnehmbaren Akustiksignals für den Zweiradfahrer. Das Verfahren erfolgt gemäß dem in Fig. 3 gezeigten Ablauf.

In Schritt 300 erfolgt die Bereitstellung eines Akustiksignals durch das Zweirad. Das Akustiksignal kann ein von dem Zweirad 10 erzeugtes Betätigungssignal eines der Bedienelemente 12 sein. Beispielsweise betätigt der Zweiradfahrer den Blinkerhebel, so wird wie bei einem Kraftfahrzeug ein Akustiksignal erzeugt und bereitgestellt. Das Akustiksignal wird elektronisch erzeugt und ist nur bei Nutzung des Helms 20 wahrnehmbar.

Das Akustiksignal kann auch ein Sprachsignal, insbesondere des Infotainmentsystems 13 des Zweirads 10, sein. Das Sprachsignal kann auch von einem anderen Verkehrsteilnehmer, insbesondere Zweiradfahrer, empfangenes Sprachsignal sein, welches von dem Zweirad 10 über seine Kommunikationseinheit 14 empfangen wurde. Das Akustiksignal kann ferner ein Warnsignal des bereits erwähnten Fahrerassistenzsystems 18 sein. Hierzu werden sensorisch ermittelte Signale durch das Fahrerassistenzsystem 18 ausgewertet und ein der Fahrsituation entsprechendes Akustiksignal, das z.B. die Annäherung an ein Hindernis beim Rangieren signalisiert, erzeugt. Alternativ kann das Akustiksignal ein Warnsignal sein, welches von dem Zweirad 10 aus einer von dem Zweirad 10 empfangenen Information erzeugt ist. Eine solche Information kann über die Kommunikationseinheit 14 empfangen sein. Diese kann beispielsweise von einem anderen Verkehrsteilnehmer mittels Fahrzeug-zu-Fahrzeug-Kommunikation von dem Zweirad 10 empfangen sein. Das Warnsignal kann auch ein in der Umgebung des Zweirads real vorhandenes Warnsignal sein, das von einem Mikrofon (nicht dargestellt) des Zweirads erfasst wird und durch die Recheneinheit 17 in das Akustiksignal gewandelt wird.

In Schritt 310 erfolgt die Bestimmung einer Pose des von dem Zweiradfahrer getragenen Helms 20 relativ zu dem Zweirad 10. Die Pose ist die Kombination von Position und Orientierung des Helms 20 im dreidimensionalen Raum relativ zu dem Zweirad 10. Insbesondere wird dabei eine Drehung des Helms 20 relativ zur Hochachse bzw. Körperachse des Fahrers relativ zu seiner in Fig. 1 gezeigten Ausgangsposition, in der der Zweiradfahrer nach vorne schaut, erfasst. Alternativ oder zusätzlich kann auch ein Abstand des Helms relativ zu einem Bedienelement, insbesondere dem Lenker 11 des Zweirads 10, erfasst werden.

Die Ermittlung der Pose des Helms 20 relativ zu dem Zweirad 10 erfolgt mit Hilfe der inertialen Messeinheit 23 und/oder der Kamera 16 des Zweirads 10. Hierzu erforderliche Verfahren zur Bestimmung von Position und Orientierung im dreidimensionalen Raum sind aus dem Stand der Technik bekannt, so dass auf eine eingehende Beschreibung der genauen Ermittlung verzichtet wird.

In Schritt 320 erfolgt das Verarbeiten des bereitgestellten Akustiksignals in Abhängigkeit der ermittelten Pose. Ergebnis der Verarbeitung ist ein dreidimensionales Ausgabesignal, das eine binaurale Abbildung des Akustiksignals darstellt und das Akustiksignal, entsprechend des relativen Orts der Entstehung zu dem Zweirad, im dreidimensionalen Raum platziert. Die Ermittlung des dreidimensionalen Ausgabesignals erfolgt mit Hilfe der Einheit 15 und/oder 24 zur Bestimmung des Ausgabesignals. Die entsprechenden Einheiten 15 bzw. 24 können hierzu als 3D-Soundprozessoren ausgebildet sein. Entsprechende Algorithmen zur Bereitstellung des dreidimensionalen Ausgabesignals sind aus dem Stand der Technik bekannt, so dass auch hier auf eine ausführliche Beschreibung verzichtet wird.

Erfolgt die Erzeugung des dreidimensionalen Ausgabesignals mit Hilfe der Einheit 15 des Zweirads 10, so werden das Akustiksignal und die die Pose repräsentierenden Informationen der Einheit 15 zur Verfügung gestellt. Wird die Pose durch die Kamera 16 des Zweirads 10 ermittelt, so liegen in dem Zweirad 10 alle zur Ermittlung des dreidimensionalen Ausgabesignals erforderlichen Informationen vor. Erfolgt die Ermittlung der Pose hingegen mit Hilfe der inertialen Messeinheit 23 des Helms 20, so werden entsprechende Daten von der Kommunikationseinheit 22 an die Kommunikationseinheit 14 des Zweirads 10 übertragen und dann der Einheit 15 zur Verarbeitung zugeführt.

Erfolgt die Bestimmung des dreidimensionalen Ausgabesignals durch die Einheit 24 des Helms 20, so wird das Akustiksignal von der Kommunikationseinheit 14 des Zweirads 10 an die Kommunikationseinheit 22 des Helms 20 übertragen. Die die Pose repräsentierenden Informationen werden ebenfalls mit Hilfe der Kommunikationseinheiten 14, 22 von dem Zweirad 10 an den Helm 20 übertragen, wenn diese durch die Kamera 16 ermittelt wurden. Die Übermittlung dieser Daten ist dagegen nicht erforderlich, sofern die Pose mit Hilfe der inertialen Messeinheit 23 in den Helm 20 erfolgt.

In Schritt 330 erfolgt die Ausgabe des dreidimensionalen Ausgabesignals über den Stereokopfhörer 21 des Helms 20. Dabei wird das Ausgabesignal in Abhängigkeit der ermittelten Pose derart im Raum platziert, dass eine in dem Akustiksignal enthaltene Schallquelle für den Zweiradfahrer räumlich verortbar ist.

Betätigt der Zweiradfahrer beispielsweise den Blinkerhebel, so wird das vorstehend erzeugte Knacken des Blinkerrelais als Akustiksignal erzeugt. Ist der Blinkerhebel beispielsweise das mit dem Bezugszeichen 12 im linken Bereich des Lenkers befindliche Bedienelement, so wird das Ausgabesignal derart erzeugt, dass das Knacken des Relais aus Sicht des Zweiradfahrers von vorne links aus dem Bereich des Lenkers 11 kommt. Dies wird durch eine Anpassung der Signallaufzeiten und der Amplituden der Signale zwischen dem linken und dem rechten Lautsprecher 21L, 21R ermöglicht. Dreht der Zweiradfahrer, wie dies in Fig. 2 gezeigt ist, seinen Kopf um die Hochachse des Zweirads bzw. seine Körperachse leicht nach links, so erfolgt eine Anpassung der Zeitdifferenzen und Signalamplituden, so dass der Ort der Schallquelle immer noch als vom linken Bereich des Lenkers 11 stammend von dem Zweiradfahrer wahrgenommen wird.

Nutzt der Zweiradfahrer ein Parkassistenzsystem beim Rangieren, so wird, wenn sich das Zweirad 10 z.B. hinten rechts einem Objekt annähert, das Akustiksignal derart in das Ausgabesignal gewandelt, dass der Fahrer den Warnton als von hinten rechts kommend wahrnimmt. Bei einer Drehung des Kopfes, wie diese beim Rangieren in der Regel durch den Zweiradfahrer vorgenommen wird, erfolgt dabei wiederum eine Anpassung von Laufzeitdifferenzen und Signalamplituden, dass der Ort der Schallquelle, d.h. des Annäherungstons, statisch hinten rechts hinter dem Zweirad 10 verbleibt.

Bei einer Gruppenfahrt mit mehreren Fahrern kann den anderen Teilnehmern mit Hilfe des vorgeschlagenen Verfahrens ein fester Ort relativ zu dem eigenen Zweirad 10 akustisch zugewiesen werden. So erscheinen sprachliche Mitteilungen eines ersten Fahrers, der sich beispielsweise rechts von dem Zweirad 10 befindet, als von rechts kommend. Bei einem anderen, zweiten Zweiradfahrer, der sich links hinter dem eigenen Zweirad 10 befindet, wird beim Empfangen entsprechender Sprachsignale das Ausgabesignal derart erzeugt, dass der zweite Zweiradfahrer als links hinter dem Motorrad befindlich erscheint.

Das Verfahren ermöglicht auch die Bereitstellung eines erweiterten Sprachassistenten. Beispielsweise kann beim Versuch, eine bestimmte Komponente des Zweirads aufzufinden, das Ausgabesignal in Abhängigkeit einer richtigen oder falschen Annäherung an die fragliche Komponente lauter oder leiser gemacht werden. Hierdurch erhält der Zweiradfahrer einen akustischen Hinweis, ob er sich der gesuchten Komponente annähert oder sich von dieser entfernt. Ein Sprachassistenzsystem kann Hinweise direkt am Bedienelement platzieren. Fragt der Nutzer beispielsweise nach der Funktionalität des Lichtschalters, so kann der Sprachassistent das Tonsignal so formen, dass der Benutzer den Schalter einfacher finden kann.

Die Lokalisierung von Akustiksignalen ermöglicht es dem Zweiradfahrer sicherer und schneller zu reagieren. Es ist ferner die Realisierung von Fahrerassistenzsystem, wie z.B. Park Distance Control, möglich, ohne dass das Zweirad mit einem Bildschirm oder weiteren Lautsprechern ausgestattet werden müsste.

Beim Fahren in einer Gruppe reduziert sich die kognitive Last für den Zweiradfahrer bei der Lokalisierung einzelner Mitfahrer.

Ferner wird die Umsetzung von Funktionalitäten ermöglicht, die normalerweise am Motorrad befestigte Ausgabeeinheiten benötigen.

### Zitatliste

[1] A. Kim et al.: "A Quaternion-Based Orientation Estimation Algorithm Using an Inertial Measurement Unit", 2004, IEEE, Seiten 268-272
[2] S. LaValle et al.: "Head Tracking for the Oculus Rift", abrufbar unter http://msl.cs.illinois.edu/~lavalle/papers/LavYerKatAnt14.pdf
[3] E. Foxlin: "Head-tracking relative to a moving vehicle or simulator platform using differential inertial sensors", Proceedings of Helmet and Head-Mounted Displays V, SPIE Vol. 4021, AeroSense Symposium, Orlando, FL, 24.-25. April 2000
[4] M. Meina et al.: "Position tracking using inertial and magnetic sensing aided by permanent magnet", Proceedings of the Federated Conference on Computer Science and Information Systems, ACSIS, Vol. 8, 2006, IEEE, Seiten 105-111
[5] A. Chen et al.: "Single-camera kinematic tracking using ArUco markers", 7. Dezember 2016, abrufbar unter http://eecs.mines.edu/Courses/csci507/projects/2016/Actis_Chen.pdf
[6] M. Lalwani: "Surrounded by sound: how 3D audio hacks your brain", The Verge, 12. Februar 2015, abrufbar unter http://www.theverge.com/2015/2/12/8021733/3d-audio-3dio-binaural-immersive-vr-sound-times-square-new-york
[7] D. Hong et al.: "Real-time sound propagation hardware accelerator for immersive virtual reality 3D audio", Proceeding, 13D'17 Proceedings of the 21st ACM SIG-GRAPH Symposium on Interactive 3D Graphics and Games, Article No. 20, San Francisco, California, 25.-27. Februar 2017

### Bezugszeichenliste

- 1: System zur Bereitstellung eines räumlich wahrnehmbaren Akustiksignals
- 10: Zweirad
- 11: Lenker
- 12: Bedienelement
- 13: Anzeigeelement/Infotainmentsystem
- 14: Kommunikationseinheit
- 15: Einheit zur Bestimmung des Ausgabesignals (3D Soundprozessor)
- 16: Kamera
- 17: zentrale Steuereinheit
- 18: Fahrerassistenzsystem
- 20: Helm
- 21: Stereokopfhörer
- 21L: linker Lautsprecher
- 21R: rechter Laufsprecher
- 22: Kommunikationseinheit
- 23: inertiale Messeinheit (IMU)
- 24: Einheit zur Bestimmung des Ausgabesignals (3D Soundprozessor)

## Patentansprüche

1. Verfahren zur Bereitstellung eines räumlich wahrnehmbaren Akustiksignals für einen Zweiradfahrer, mit den Schritten:
- Bereitstellen eines Akustiksignals durch ein Zweirad (10), wobei das Akustiksignal ein von dem Zweirad (10) erzeugtes Betätigungssignal eines Bedienelements (12) des Zweirads (10) ist, das abhängig von der Stellung eines Schalters des Bedienelements (12) erzeugt wird;
- Bestimmen einer Pose eines von dem Zweiradfahrer getragenen Helms (20) relativ zu dem Zweirad (10);
- Verarbeiten des Akustiksignals in Abhängigkeit der ermittelten Pose zu einem dreidimensionalen Ausgabesignal, das eine binaurale Abbildung des Akustiksignals darstellt;
- Ausgabe des Ausgabesignals über einen Stereokopfhörer (21) des Helms (20), wobei das Ausgabesignal in Abhängigkeit der ermittelten Pose eine in dem Akustiksignal enthaltene Schallquelle im Raum platziert, wodurch die Schallquelle für den Zweiradfahrer räumlich verortbar ist, und wobei das Ausgabesignal über die Lautstärke einen Eindruck vermittelt, wie nah sich der Ort der Schallquelle relativ zu dem Zweiradfahrer befindet.

2. Verfahren nach Anspruch 1, bei dem das Akustiksignal ein von dem Zweirad (10) erzeugtes Betätigungssignal eines Blinkerhebels oder eines Multifunktionscontrollers ist.

3. Verfahren nach Anspruch 1 oder 2, bei dem das Akustiksignal ein Sprachsignal, insbesondere eines Infotainmentsystems (13) des Zweirads (10) oder ein von einem anderen Verkehrsteilnehmer, insbesondere Zweiradfahrer, empfangenes Sprachsignal, ist.

4. Verfahren nach einem der vorhergehenden Ansprüche, bei dem das Akustiksignal ein Warnsignal eines Fahrerassistenzsystems (18), insbesondere einer Rangier- oder Einparkhilfe oder eines Totwinkelsystems oder eines Querverkehrwarnsystems, des Zweirads (10) ist.

5. Verfahren nach einem der vorhergehenden Ansprüche, bei dem das Akustiksignal ein Warnsignal ist, welches von dem Zweirad (10) aus einer von dem Zweirad (10) empfangenen Information erzeugt ist, wobei die Information ein Warnton eines anderen Verkehrsteilnehmers ist, der von einem Mikrophon des Zweirads (10) erfasst wird, oder wobei die Information eine von einem Sender ausgesendete und empfangene Nachricht ist, die eine Warnung repräsentiert.

6. Verfahren nach einem der vorhergehenden Ansprüche, bei dem die Bestimmung der Pose des von dem Zweiradfahrer getragenen Helms (20) relativ zu dem Zweirad (10) durch eine inertiale Messeinheit (23) in dem Helm (20) und/oder dem Zweirad (10) und/oder durch eine oder mehrere Kameras (16) in dem Helm (20) und/oder dem Zweirad (10) erfolgt.

7. Verfahren nach Anspruch 6, bei dem die Bestimmung der Pose des von dem Zweiradfahrer getragenen Helms (20) relativ zu dem Zweirad (10) zumindest eine Rotationsbewegung des Helms (20) relativ zu der Fahrtrichtung des Zweirads (10) umfasst.

8. Verfahren nach Anspruch 6 oder 7, bei dem die Bestimmung der Pose des von dem Zweiradfahrer getragenen Helms (20) relativ zu dem Zweirad (10) eine Entfernung des Helms (20) zu einem Lenker des Zweirads (10) und/oder zu einer anderen Komponente des Zweirads (10) umfasst.

9. Verfahren nach einem der Ansprüche 6 bis 8, bei dem die Bestimmung der Pose durch eine Recheneinheit in dem Helm (20) und/oder dem Zweirad (10) durchgeführt wird.

10. Verfahren nach einem der Ansprüche 1 bis 9, bei dem das Akustiksignals von dem Zweirad (10) an den Helm (20) des Zweiradfahrers übertragen wird und eine Bestimmung des Ausgabesignals durch eine Recheneinheit in dem Helm (20) durchgeführt wird.

11. Verfahren nach einem der Ansprüche 1 bis 9, bei dem eine Bestimmung des Ausgabesignals durch eine Recheneinheit in dem Zweirad (10) durchgeführt wird das Ausgabesignal von dem Zweirad (10) an den Helm (20) des Zweiradfahrers übertragen wird.

12. Verfahren nach Anspruch 10 oder 11, bei dem die Ermittlung des Ausgabesignals durch einen 3D-Soundprozesser erfolgt, indem das Akustiksignal und die Pose repräsentierende Informationen miteinander zu dem Ausgabesignal verknüpft werden

13. System zur Bereitstellung eines räumlich wahrnehmbaren Akustiksignals für einen Zweiradfahrer gemäß dem Verfahren der vorhergehenden Ansprüche, umfassend:
- ein Zweirad (10) mit einer ersten Kommunikationseinheit, wobei durch das Zweirad (10) ein Akustiksignal, das ein von dem Zweirad (10) erzeugtes Betätigungssignal eines Bedienelements (12) des Zweirads (10) ist, das abhängig von der Stellung eines Schalters des Bedienelements (12) erzeugt ist, bereitstellbar ist, in dem zumindest eine Schallquelle enthalten ist;
- ein von einem Zweiradfahrer zu tragender Helm (20) mit einer zweiten Kommunikationseinheit und einem Stereokopfhörer (21) zur Wiedergabe eines Ausgabesignals;
- eine Einheit zur Bestimmung einer Pose des Helms (20) relativ zu dem Zweirad (10);
- eine Einheit zur Bestimmung des Ausgabesignals, indem das Akustiksignal in Abhängigkeit der ermittelten Pose und der Nähe des Orts der Schallquelle relativ zu dem Zweiradfahrer zu dem dreidimensionalen Ausgabesignal, das eine binaurale Abbildung des Akustiksignals darstellt, verarbeitet wird.

14. System nach Anspruch 13, **dadurch gekennzeichnet, dass** der Helm (20) und/oder das Zweirad (10) eine inertiale Messeinheit (23) und/oder eine oder mehrere Kameras (16) umfassen.

15. System nach Anspruch 13 oder 14, **dadurch gekennzeichnet, dass** der Helm (20) oder das Zweirad (10) die Einheit zur Bestimmung der Pose des Helms (20) umfassen.

16. System nach einem der Ansprüche 13 bis 15, **dadurch gekennzeichnet, dass** der Helm (20) oder das Zweirad (10) die Einheit zur Bestimmung des Ausgabesignals umfassen.

17. System nach einem der Ansprüche 13 bis 15, **dadurch gekennzeichnet, dass** dieses weitere Mittel zur Durchführung des Verfahrens nach einem der Ansprüche 1 bis 12 umfasst.

18. Helm (20) zur Bereitstellung eines räumlich wahrnehmbaren Akustiksignals für einen Zweiradfahrer zur Verwendung in einem Verfahren gemäß einem der Ansprüche 1 bis 12, umfassend
- eine Kommunikationseinheit;
- einen Stereokopfhörer (21) zur Wiedergabe eines Ausgabesignals, wobei das Akustiksignal ein von dem Zweirad (10) erzeugtes Betätigungssignal eines Bedienelements (12) des Zweirads (10) ist, das abhängig von der Stellung eines Schalters des Bedienelements (12) erzeugt ist;
- eine Einheit zur Bestimmung des Ausgabesignals, indem das Akustiksignal in Abhängigkeit einer ermittelten Pose und der Nähe des Orts der Schallquelle relativ zu dem Zweiradfahrer zu dem dreidimensionalen Ausgabesignal, das eine binaurale Abbildung des Akustiksignals darstellt, verarbeitet wird.

19. Helm (20) nach Anspruch 18, **dadurch gekennzeichnet, dass** dieser eine inertiale Messeinheit (23) umfasst.

20. Helm (20) nach Anspruch 18 oder 19, **dadurch gekennzeichnet, dass** dieser eine Einheit zur Bestimmung der Pose des Helms (20) umfasst.

## Claims

1. Method for providing a spatially perceptible acoustic signal for a rider of a two-wheeled vehicle, with the following steps:
- providing an acoustic signal by a two-wheeled vehicle (10), wherein the acoustic signal is an actuation signal which is generated by the two-wheeled vehicle (10) for an operating element (12) of the two-wheeled vehicle (10) and is generated on the basis of the position of a switch of the operating element (12);
- determining a pose of a helmet (20) worn by the rider of the two-wheeled vehicle relative to the two-wheeled vehicle (10);
- processing the acoustic signal depending on the determined pose to form a three-dimensional output signal which constitutes a binaural projection of the acoustic signal;
- outputting the output signal via a stereo headset (21) of the helmet (20), wherein the output signal spatially places a sound source contained in the acoustic signal depending on the determined pose, whereby the sound source is spatially locatable by the rider of the two-wheeled vehicle, and wherein the output signal gives an impression of how close the location of the sound source is relative to the rider of the two-wheeled vehicle via the sound volume.

2. Method according to Claim 1, in which the acoustic signal is an actuation signal generated by the two-wheeled vehicle (10) for an indicator lever or a multifunction controller.

3. Method according to Claim 1 or 2, in which the acoustic signal is a voice signal, in particular of an infotainment system (13) of the two-wheeled vehicle (10), or a voice signal received from a different road user, in particular a rider of a two-wheeled vehicle.

4. Method according to one of the preceding claims, in which the acoustic signal is a warning signal from a driver assistance system (18), in particular a manoeuvring or parking aid or a blind spot system or a cross-traffic warning system, of the two-wheeled vehicle (10).

5. Method according to one of the preceding claims, in which the acoustic signal is a warning signal which is generated by the two-wheeled vehicle (10) from information received by the two-wheeled vehicle (10), wherein the information is a warning tone from a different road user which is picked up by a microphone of the two-wheeled vehicle (10), or wherein the information is a received message transmitted by a transmitter, representing a warning.

6. Method according to one of the preceding claims, in which the pose of the helmet (20) worn by the rider of the two-wheeled vehicle relative to the two-wheeled vehicle (10) is determined by an inertial measurement unit (23) in the helmet (20) and/or in the two-wheeled vehicle (10) and/or by one or more cameras (16) in the helmet (20) and/or in the two-wheeled vehicle (10).

7. Method according to Claim 6, in which the determination of the pose of the helmet (20) worn by the rider of the two-wheeled vehicle relative to the two-wheeled vehicle (10) comprises at least one rotational movement of the helmet (20) relative to the direction of travel of the two-wheeled vehicle (10).

8. Method according to Claim 6 or 7, in which the determination of the pose of the helmet (20) worn by the rider of the two-wheeled vehicle relative to the two-wheeled vehicle (10) comprises a distance between the helmet (20) and a handlebar of the two-wheeled vehicle (10) and/or a different component of the two-wheeled vehicle (10).

9. Method according to one of Claims 6 to 8, in which the pose is determined by a computing unit in the helmet (20) and/or in the two-wheeled vehicle (10).

10. Method according to one of Claims 1 to 9, in which the acoustic signal is transmitted from the two-wheeled vehicle (10) to the helmet (20) of the rider of the two-wheeled vehicle and the output signal is determined by a computing unit in the helmet (20).

11. Method according to one of Claims 1 to 9, in which the output signal is determined by a computing unit in the two-wheeled vehicle (10) and the output signal is transmitted from the two-wheeled vehicle (10) to the helmet (20) of the rider of the two-wheeled vehicle.

12. Method according to Claim 10 or 11, in which the output signal is determined by a 3D sound processor by combining the acoustic signal and information representing the pose with one another to form the output signal.

13. System for providing a spatially perceptible acoustic signal for a rider of a two-wheeled vehicle according to the method set out in the preceding claims, comprising:
- a two-wheeled vehicle (10) with a first communication unit, wherein an acoustic signal, which is an actuation signal which is generated by the two-wheeled vehicle (10) for an operating element (12) of the two-wheeled vehicle (10) and is generated on the basis of the position of a switch of the operating element (12), is providable by the two-wheeled vehicle (10) and contains at least one sound source;
- a helmet (20) to be worn by a rider of the two-wheeled vehicle with a second communication unit and a stereo headset (21) to reproduce an output signal;
- a unit for determining a pose of the helmet (20) relative to the two-wheeled vehicle (10);
- a unit for determining the output signal by processing the acoustic signal depending on the determined pose and the proximity of the location of the sound source relative to the rider of the two-wheeled vehicle to form the three-dimensional output signal which constitutes a binaural projection of the acoustic signal.

14. System according to Claim 13, **characterized in that** the helmet (20) and/or the two-wheeled vehicle (10) comprise(s) an inertial measurement unit (23) and/or one or more cameras (16).

15. System according to Claim 13 or 14, **characterized in that** the helmet (20) or the two-wheeled vehicle (10) comprises the unit for determining the pose of the helmet (20).

16. System according to one of Claims 13 to 15, **characterized in that** the helmet (20) or the two-wheeled vehicle (10) comprises the unit for determining the output signal.

17. System according to one of Claims 13 to 15, **characterized in that** said system comprises further means for carrying out the method according to one of Claims 1 to 12.

18. Helmet (20) for providing a spatially perceptible acoustic signal for a rider of a two-wheeled vehicle for use in a method according to one of Claims 1 to 12, comprising
- a communication unit;
- a stereo headset (21) for reproducing an output signal, wherein the acoustic signal is an actuation signal which is generated by the two-wheeled vehicle (10) for an operating element (12) of the two-wheeled vehicle (10) and is generated on the basis of the position of a switch of the operating element (12);
- a unit for determining the output signal by processing the acoustic signal depending on a determined pose and the proximity of the location of the sound source relative to the rider of the two-wheeled vehicle to form the three-dimensional output signal which constitutes a binaural projection of the acoustic signal.

19. Helmet (20) according to Claim 18, **characterized in that** it comprises an inertial measurement unit (23).

20. Helmet (20) according to Claim 18 or 19, **characterized in that** it comprises a unit for determining the pose of the helmet (20).

## Revendications

1. Procédé pour fournir un signal acoustique spatialement perceptible à un conducteur de deux-roues, comprenant les étapes suivantes :
- fourniture d'un signal acoustique par un deux-roues (10), le signal acoustique étant un signal d'actionnement d'un élément de commande (12) du deux-roues (10) généré par le deux-roues (10) en fonction de la position d'un commutateur de l'élément de commande (12) ;
- détermination d'une position d'un casque (20) porté par le conducteur du deux-roues par rapport au deux-roues (10) ;
- traitement du signal acoustique en fonction de la position déterminée pour obtenir un signal de sortie tridimensionnel qui représente une image binaurale du signal acoustique ;
- émission du signal de sortie via des écouteurs stéréo (21) du casque (20), le signal de sortie plaçant, en fonction de la position déterminée, une source sonore contenue dans le signal acoustique dans l'espace, ce qui permet au conducteur du deux-roues de localiser spatialement la source sonore, et le signal de sortie donnant, par le volume sonore, une idée de la proximité de la source sonore par rapport au conducteur du deux-roues.

2. Procédé selon la revendication 1, dans lequel le signal acoustique est un signal d'actionnement d'un levier de clignotant ou d'un contrôleur multifonction généré par le deux-roues (10).

3. Procédé selon la revendication 1 ou la revendication 2, dans lequel le signal acoustique est un signal vocal, en particulier d'un système d'infodivertissement (13) du deux-roues (10) ou un signal vocal reçu d'un autre usager de la route, en particulier d'un conducteur de deux-roues.

4. Procédé selon l'une des revendications précédentes, dans lequel le signal acoustique est un signal d'avertissement d'un système d'aide à la conduite (18), en particulier d'une aide à la manœuvre ou au stationnement ou d'un système d'angle mort ou d'un système d'avertissement de trafic venant en croisement, du deux-roues (10).

5. Procédé selon l'une des revendications précédentes, dans lequel le signal acoustique est un signal d'avertissement qui est généré par le deux-roues (10) à partir d'une information reçue par le deux-roues (10), l'information étant un signal sonore d'avertissement d'un autre usager de la route qui est détecté par un microphone du deux-roues (10), ou l'information étant un message émis par un émetteur, et reçu, qui représente un avertissement.

6. Procédé selon l'une des revendications précédentes, dans lequel la détermination de la position du casque (20) porté par le conducteur du deux-roues par rapport au deux-roues (10) est effectuée par une unité de mesure inertielle (23) dans le casque (20) et/ou le deux-roues (10) et/ou par une ou plusieurs caméras (16) se trouvant dans le casque (20) et/ou sur le deux-roues (10).

7. Procédé selon la revendication 6, dans lequel la détermination de la position du casque (20) porté par le conducteur du deux-roues par rapport au deux-roues (10) comprend au moins un mouvement de rotation du casque (20) par rapport à la direction de déplacement du deux-roues (10).

8. Procédé selon la revendication 6 ou la revendication 7, dans lequel la détermination de la position du casque (20) porté par le conducteur du deux-roues par rapport au deux-roues (10) comprend une distance entre le casque (20) et un guidon du deux-roues (10) et/ou un autre composant du deux-roues (10).

9. Procédé selon l'une des revendications 6 à 8, dans lequel la détermination de la position est effectuée par une unité de calcul présente dans le casque (20) et/ou sur le deux-roues (10).

10. Procédé selon l'une des revendications 1 à 9, dans lequel le signal acoustique est transmis du deux-roues (10) au casque (20) du conducteur du deux-roues et une détermination du signal de sortie est effectuée par une unité de calcul présente dans le casque (20).

11. Procédé selon l'une des revendications 1 à 9, dans lequel une détermination du signal de sortie est effectuée par une unité de calcul présente dans le deux-roues (10) et le signal de sortie est transmis du deux-roues (10) au casque (20) du conducteur du deux-roues.

12. Procédé selon la revendication 10 ou la revendication 11, dans lequel la détermination du signal de sortie est effectuée par un processeur de son 3D en combinant le signal acoustique et les informations représentant la position pour former le signal de sortie.

13. Système pour fournir un signal acoustique spatialement perceptible à un conducteur de véhicule à deux roues selon le procédé des revendications précédentes, comprenant :
- un deux-roues (10) comprenant une première unité de communication, un signal acoustique étant apte à être fourni par le deux-roues (10), lequel signal acoustique est un signal d'actionnement d'un élément de commande (12) du deux-roues (10) généré par le deux-roues (10) en fonction de la position d'un commutateur de l'élément de commande (12), dans lequel est contenue au moins une source sonore ;
- un casque (20) à porter par un conducteur de deux-roues, comprenant une deuxième unité de communication et des écouteurs stéréo (21) pour la restitution d'un signal de sortie ;
- une unité pour déterminer une position du casque (20) par rapport au deux-roues (10) ;
- une unité pour déterminer le signal de sortie en traitant le signal acoustique en fonction de la position déterminée et de la proximité de l'emplacement de la source sonore par rapport au conducteur du véhicule à deux roues afin d'obtenir le signal de sortie tridimensionnel qui représente une image binaurale du signal acoustique.

14. Système selon la revendication 13, **caractérisé en ce que** le casque (20) et/ou le deux-roues (10) comprennent une unité de mesure inertielle (23) et/ou une ou plusieurs caméras (16).

15. Système selon la revendication 13 ou la revendication 14, **caractérisé en ce que** le casque (20) ou le deux-roues (10) comprend l'unité pour déterminer la position du casque (20).

16. Système selon l'une des revendications 13 à 15, **caractérisé en ce que** le casque (20) ou le deux-roues (10) comprend l'unité pour déterminer le signal de sortie.

17. Système selon l'une des revendications 13 à 15, **caractérisé en ce qu'**il comprend en outre des moyens pour la mise en œuvre du procédé selon l'une des revendications 1 à 12.

18. Casque (20) destiné à fournir un signal acoustique spatialement perceptible à un conducteur de deux-roues, à utiliser dans un procédé selon l'une des revendications 1 à 12, comprenant
- une unité de communication ;
- des écouteurs stéréo (21) pour reproduire un signal de sortie, le signal acoustique étant un signal d'actionnement d'un élément de commande (12) du deux-roues (10) généré par le deux-roues (10) en fonction de la position d'un commutateur de l'élément de commande (12) ;
- une unité pour déterminer le signal de sortie en traitant le signal acoustique en fonction d'une position déterminée et de la proximité de l'emplacement de la source sonore par rapport au conducteur du deux-roues pour obtenir le signal de sortie tridimensionnel qui représente une image binaurale du signal acoustique.

19. Casque (20) selon la revendication 18, **caractérisé en ce qu'**il comprend une unité de mesure inertielle (23).

20. Casque (20) selon la revendication 18 ou la revendication 19, **caractérisé en ce qu'**il comprend une unité pour déterminer la position du casque (20).
